# FASCICULE DE BREVET EUROPEEN

(11) **EP 0 398 792 B1**
(45) Date de publication et mention de la délivrance du brevet: **22.09.1993**
(21) Numéro de dépôt: 90401266.3
(22) Date de dépôt: 14.05.1990
(51) Int. Cl.: F22B 37/00

(54) **Appareil pour le positionnement d'un organe dans une cavite cylindrique comportant des perforations disposées selon un réseau régulier**
Einrichtung zum Positionieren eines Gerätes in eine zylindrische Höhlung mit regelmässig geordneten Perforationen
Apparatus for the positioning of equipment in a cylindric cavity having perforations arranged in a regular pattern

(30) Priorité: 16.05.1989 FR 8906369
(43) Date de publication de la demande: 22.11.1990
(73) Titulaire: INTERCONTROLE Société Anonyme, 94583 Rungis Cédex (FR)
(72) Inventeur: Wanhem, Jean-Pierre, F-91700 Sainte Geneviève des Bois (FR); Guillo, Benoît, F-75015 Paris (FR)
(74) Mandataire: Mongrédien, André

(56) Documents cités:
- EP-A- 0 276 819
- DE-C- 3 419 086
- FR-A- 2 566 309
- NUCLEAR ENGINEERING INTERNATIONAL. vol. 33, no. 402, janvier 1988, SUTTON, SURREY, GB pages 27 - 30; E.FISCHER: "Mechanized inspection and repair for VVER type PWRS"

## Description

L'invention concerne un appareil permettant d'effectuer le positionnement d'un organe tel qu'un tube guide d'une sonde de contrôle à courants de Foucault, dans une cavité cylindrique pourvue d'une ouverture d'accès à l'une au moins de ses extrémités et dans laquelle sont formées des perforations, selon un réseau régulier.

Dans les réacteurs nucléaires, le transfert de chaleur entre le fluide primaire servant à refroidir le coeur du réacteur et l'eau vaporisée servant à entraîner les turbines utilisées pour produire l'électricité s'effectue par l'intermédiaire de générateurs de vapeur. A l'intérieur de ces générateurs de vapeur, un faisceau de tubes de grande longueur assure le transfert de chaleur en évitant tout contact direct entre les deux fluides.

Dans certains types de générateurs de vapeur, le faisceau de tubes est placé dans une enveloppe cylindrique d'axe horizontal et les extrémités de chacun des tubes débouchent dans deux collecteurs cylindriques d'axes verticaux placés à l'intérieur de cette enveloppe. Des ouvertures d'accès, formées par exemple aux extrémités supérieures des collecteurs, permettent d'accéder à ces derniers après enlèvement d'un bouchon.

En raison du caractère corrosif des fluides utilisés pour le refroidissement des réacteurs nucléaires, il est nécessaire de contrôler périodiquement les tubes du faisceau, ce qui peut être fait par exemple en envoyant un gaz traceur dans chacun des tubes ou en y introduisant une sonde à courants de Foucault.

Compte tenu de la radioactivité élevée qui règne dans les collecteurs des générateurs de vapeur, il est souhaitable de pouvoir disposer d'un appareil permettant de positionner à distance un organe tel qu'un tube guide par lequel peut être introduite une sonde à courants de Foucault, successivement en face de chacune des perforations débouchant dans ce collecteur.

Un tel appareil, qui doit être relativement facile à mettre en oeuvre, doit en outre tenir compte du fait que, bien que les perforations soient disposées selon un réseau régulier, ce réseau présente le plus souvent des discontinuités et certaines des perforations ont pu être obturées lors d'une opération de maintenance effectuée auparavant. De plus, l'écartement entre les perforations peut varier légèrement, compte tenu des tolérances de fabrication.

Pour effectuer de telles opérations de contrôle, il existe un appareil comprenant un mât qui est disposé selon l'axe vertical du collecteur et qui supporte un ensemble conçu pour injecter une sonde à courants de Foucault. Chacune des perforations est atteinte en faisant tourner le mât et en déplaçant verticalement l'ensemble d'injection le long de ce mât.

Cet appareil connu présente un certain nombre d'inconvénients. En premier lieu, sa mise en place doit être faite avec une grande précision et nécessite la présence d'une étoile de centrage supplémentaire à l'extrémité inférieure du mât. De plus, même si la mise en place de l'appareil est faite correctement, le caractère irrégulier du réseau de perforations conduit à une mise en oeuvre longue et délicate. Le personnel utilisant cet appareil doit donc subir une formation particulière. En outre, l'ensemble du dispositif permettant d'introduire et d'extraire la sonde à courants de Foucault est placé dans le collecteur, ce qui est peu souhaitable, compte tenu de la contamination radioactive régnant dans ce dernier.

On connaît par ailleurs de nombreux appareils conçus pour positionner un organe tel qu'un guide tube d'une sonde à courants de Foucault, dans les collecteurs des générateurs de vapeur de structures différentes, dans lesquels les tubes sont raccordés sur une plaque à tubes horizontale sous laquelle se trouvent les collecteurs. Pour illustrer ces appareils existants, on citera notamment les documents EP-A-0 030 484 et FR-A-2 382 986.

Dans le document EP-A-0 030 484, un bras télescopique est articulé par une rotule sur un support prévu pour être fixé sur une ouverture d'accès du collecteur. A son extrémité, ce bras porte également par l'intermédiaire d'une rotule un chariot portant une tube guide par exemple pour une sonde à courants de Foucault. Ce chariot est équipé d'une chenille pourvue de doigts aptes à pénétrer dans les perforations de la plaque sous l'effet d'un placage élastique du chariot contre cette dernière réalisé par le bras. Le chariot est en outre équipé d'un moteur permettant de commander l'avance de la chenille.

Par ailleurs, le document FR-A-2 382 986 décrit un appareil comportant une colonne verticale prenant appui respectivement sur la plaque à tubes et sur la paroi du générateur de vapeur située en face de celle-ci. La colonne supporte une flèche horizontale sur laquelle peut se déplacer un chariot portant l'organe qui doit être positionné en face des tubes. Le positionnement est obtenu en combinant un déplacement du chariot le long de la flèche et une rotation de la colonne autour de son axe propre.

Ces appareils existants sont conçus de façon spécifique pour être utilisés dans des collecteurs de générateurs de vapeur délimités entre une plaque à tubes horizontale et une paroi inférieure hémisphérique du générateur de vapeur. Ils ne peuvent en aucun cas être transposés à des collecteurs cylindriques pourvus de perforations débouchant radialement à l'intérieur de ces collecteurs, sans subir des modifications profondes.

L'invention a précisément pour objet un appareil conçu pour assurer le positionnement sélectif d'un organe tel qu'un tube guide dans une cavité cylindrique, dans laquelle débouchent des perforations, cet appareil ne présentant pas les inconvénients des appareils existants adaptés à des cavités de cette forme, et permettant notamment une mise en oeuvre particulièrement simple, fiable et rapide.

Selon l'invention, ce résultat est obtenu au moyen d'un appareil pour le positionnement sélectif d'un organe dans une cavité cylindrique d'axe donné, pourvue d'une ouverture d'accès à l'une de ses extrémités et dans laquelle débouchent radialement des perforations disposées selon un réseau, caractérisé par le fait qu'il comprend une embase prévue pour être fixée sur ladite ouverture et supportant un mât par l'intermédiaire de moyens de positionnement permettant de déplacer ce mât en rotation et en translation entre différentes positions d'indexage préétablies, le mât étant orienté parallèlement à l'axe de la cavité et supportant, à l'intérieur de cette dernière, un patin d'appui et une tête de travail reliée au patin d'appui par un bras de placage extensible muni de moyens d'allongement dont une mise en oeuvre a pour effet de plaquer simultanément le patin d'appui et la tête de travail contre une paroi intérieure cylindrique de la cavité, la tête de travail étant équipée de doigts escamotables aptes à être introduits dans les perforations, de moyens de commande d'un déplacement de la tête de travail dans une zone de travail donnée de ladite paroi, différente pour chacune des positions d'indexage du mât, et d'au moins un support apte à recevoir ledit organe à positionner.

Avantageusement, le patin d'appui est monté sur un pantographe articulé sur une platine fixée dans le prolongement du mât, le bras de placage extensible étant articulé de façon rotulante sur le pantographe, à proximité du patin d'appui et sur la tête de travail. De préférence, la platine supporte également une caméra de télévision.

Selon un mode de réalisation préféré de l'invention, le pantographe comprend un premier bras monté pivotant à l'extrémité de la platine la plus éloignée du mât, autour d'un axe perpendiculaire à l'axe du mât, ce premier bras portant le patin d'appui à son extrémité, et un deuxième bras formé de deux segments articulés entre eux et, par leurs extrémités opposées, sur la platine et sur le premier bras, par des axes perpendiculaires à l'axe du mât, les segments du deuxième bras occupant une position alignée déterminée par une butée lorsque le pantographe est déployé, et une position pliée en éloignement du premier bras lorsque le pantographe est replié.

Afin que le positionnement de la tête de placage sur la paroi s'effectue sans difficulté, elle est avantageusement articulée sur le bras de placage par une rotule disposant seulement de deux degrés de liberté de rotation, respectivement autour d'un premier axe perpendiculaire à l'axe du mât et à l'axe du bras de placage et autour d'un deuxième axe perpendiculaire au premier et apte à être orienté parallèlement à l'axe du mât.

La tête de travail peut comprendre deux cadres aptes à se déplacer selon deux directions perpendiculaires l'une par rapport à l'autre, par rapport à une pièce centrale à laquelle est relié le bras de placage extensible, chacun de ces cadres comportant quatre doigts escamotables, lesdits moyens de commande de déplacement étant agencés de façon à pouvoir commander un déplacement sur une distance égale à un pas d'un réseau rectangulaire formé par les perforations et selon un demi-pas de ce réseau. Cette structure permet notamment de s'adapter à un réseau triangulaire formé par la superposition de deux réseaux à pas rectangulaire, décalés d'un demi-pas l'un par rapport à l'autre.

Un mode de réalisation préféré de l'invention va à présent être décrit, en se référant aux dessins annexés, dans lesquels :
- la figure 1 est une vue en coupe transversale d'un générateur de vapeur comportant deux collecteurs cylindriques dans l'un desquels a été introduit l'appareil selon l'invention ;
- la figure 2 est une vue en coupe schématique représentant à plus grande échelle la partie supérieure du collecteur, dans lequel a été introduit l'appareil selon l'invention ;
- la figure 3 est une vue en coupe partielle représentant encore à plus grande échelle la partie inférieure de l'appareil illustré sur la figure 2 ;
- la figure 4 est une vue en coupe selon la ligne IV-IV de la figure 3 ;
- la figure 5 est une vue de dessus de la tête de travail de l'appareil de la figure 2 ;
- la figure 6 est une vue en coupe selon la ligne VI-VI de la figure 5 ;
- la figure 7 est une vue de côté de la tête de travail, en coupe partielle ; et

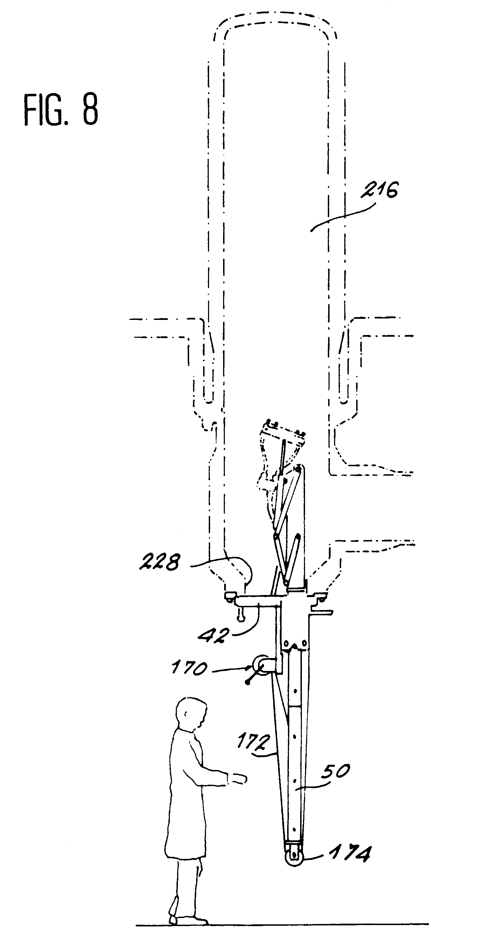

- la figure 8 est une vue représentant schématiquement l'introduction de l'appareil selon l'invention par une ouverture d'accès formée à l'extrémité inférieure d'un collecteur cylindrique vertical.

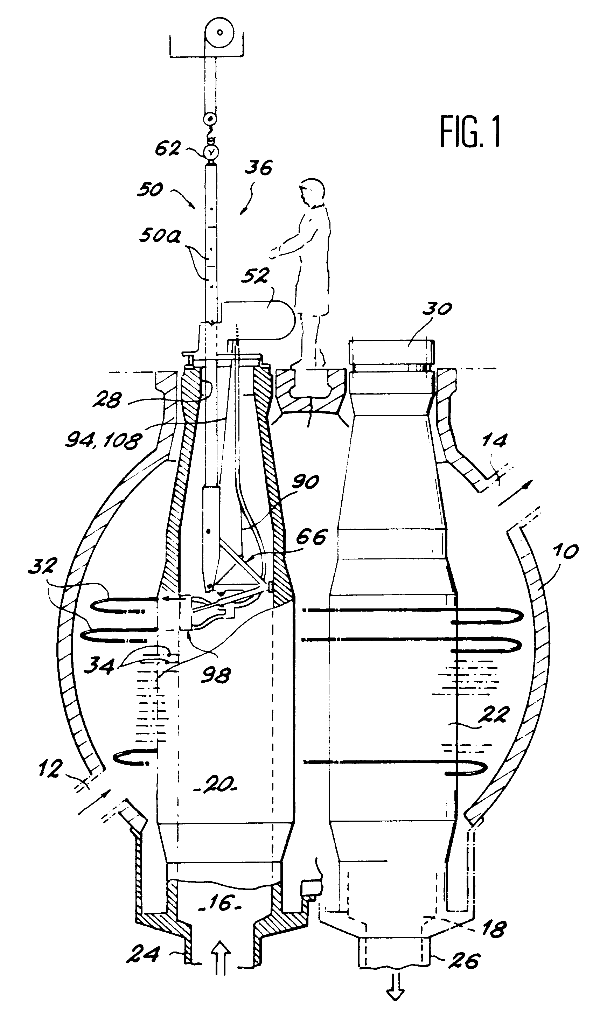

Sur la figure 1, on a représenté en coupe transversale un générateur de vapeur conçu pour être placé entre le circuit primaire et le ciruit secondaire d'un réacteur nucléaire. Ce générateur de vapeur comprend une enveloppe extérieure cylindrique 10, d'axe d'horizontal. Cette enveloppe 10 est équipée d'une tubulure d'entrée d'eau secondaire à l'état liquide et d'une tubulure de sortie de vapeur représentées de façon schématique et désignés respectivement par les références 12 et 14 sur la figure 1.

Le générateur de vapeur illustré sur la figure 1 comprend de plus, à l'intérieur de l'enveloppe 10, un collecteur 16 d'entrée de fluide primaire et un collecteur 18 de sortie de fluide primaire. Ces collecteurs 16 et 18 présentent la forme de deux cavités cylindriques, d'axes verticaux, délimités respectivement par des plaques tubulaires 20 et 22. Les extrémités inférieures de chacun des collecteurs 16 et 18 sont raccordées sur le circuit primaire du réacteur respectivement par des tubulures 24 et 26. L'extrémité supérieure de chacun des collecteurs 16 et 18 comporte une ouverture d'accès circulaire 28. Lorsque le réacteur est en fonctionnement, cette ouverture d'accès est normalement obturée par un bouchon 30.

Les collecteurs d'entrée 16 et de sortie 18 communiquent entre eux par un faisceau de tubes 32 placé à l'intérieur de l'enveloppe 10 du générateur de vapeur et dont les extrémités sont raccordées sur les plaques tubulaires 20 et 22 des collecteurs, de façon à communiquer avec ces derniers par des perforations 34 traversant radialement les plaques 20 et 22.

Sur la figure 1, la référence 36 désigne de façon générale un appareil conforme à l'invention, conçu pour positionner successivement en face de chacune des perforations 34 des plaques tubulaires des collecteurs un organe tel qu'un tube guide permettant d'introduire dans chacune de ces perforations une sonde à courants de Foucault apte à contrôler les tubes 32. Sur la figure 1, l'appareil 36 est représenté installé dans le collecteur d'entrée 16 du générateur de vapeur. Cependant, étant donné que les deux collecteurs 16 et 18 ont la même géométrie, l'appareil 36 selon l'invention pourrait aussi bien être introduit dans le collecteur de sortie 18.

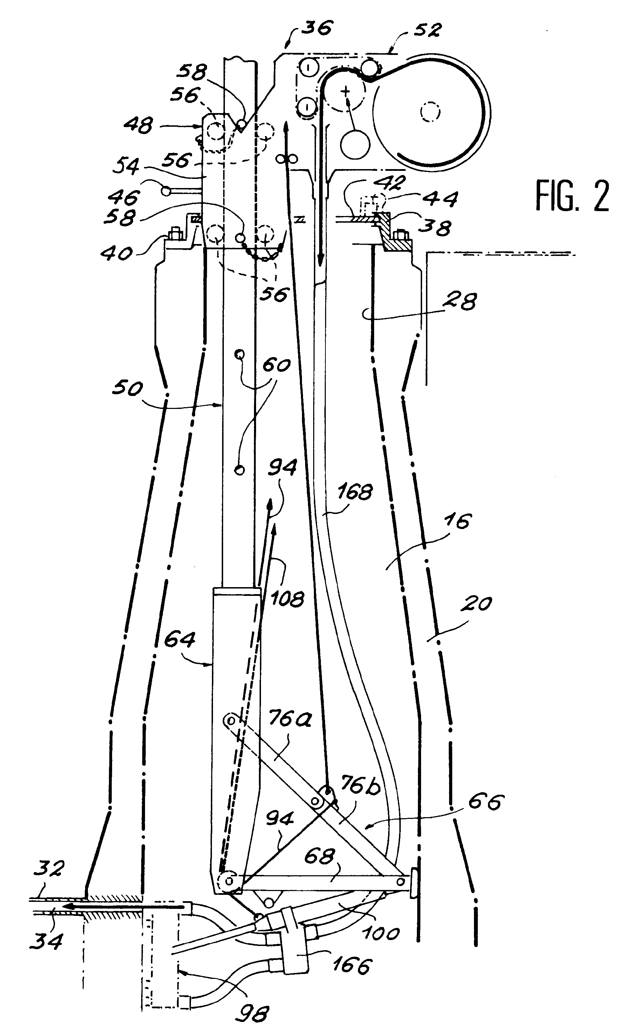

L'appareil 36 conforme à l'invention va à présent être décrit en détail en se référant aux figures 2 à 6.

Comme l'illustre la figure 2, l'appareil 36 est introduit par l'ouverture d'accès 28 du collecteur 16, après enlèvement du bouchon obturant cette ouverture. Il comprend une embase 38 qui est fixée sur le bord supérieur de la paroi 20 du collecteur, par exemple au moyen des goujons 40 servant à fixer le bouchon qui obture en fonctionnement l'ouverture d'accès 28.

L'embase 38 supporte un plateau tournant horizontal 42. Ce plateau 42 peut occuper différentes positions angulaires préétablies par rapport à l'embase 38. Ces positions préétablies peuvent notamment être fixées par un mécanisme d'indexage 44 comprenant par exemple une goupille qui traverse simultanément des perforations alignées formées dans l'embase 38 et dans le plateau tournant 42. A titre d'exemple, quatre positions angulaires préétablies décalées de 90° les unes par rapport aux autres peuvent ainsi être définies. Dans l'exemple de réalisation représenté, la rotation du plateau tournant 42 est assurée manuellement au moyen d'une poignée de manoeuvre 46.

Le plateau tournant 42 supporte à la fois un mécanisme 48 de guidage en translation d'un mât vertical 50 et un dispositif tireur-pousseur 52 commandant les déplacements de la sonde à courants de Foucault dans les tubes 32.

Le mécanisme 48 de guidage en translation du mât 50 comprend un boîtier 54 solidaire du plateau tournant 42 et supportant deux jeux de galets 56 décalés verticalement l'un par rapport à l'autre. Le mât 50, par exemple de section circulaire, passe entre les galets 56 de façon à pouvoir se déplacer verticalement selon son axe, cet axe étant parallèle et décalé par rapport à l'axe vertical du collecteur 16.

Le mât 50 peut occuper différentes positions préétablies en hauteur par rapport au plateau tournant 42. Ces positions préétablies peuvent notamment être fixées par un mécanisme d'indexage du mât en hauteur comprenant deux goupilles 58, reliées par exemple par des chaînes au boîtier 54, approximativement au niveau de chacun des jeux de galets 56, de façon à pouvoir être introduites simultanément dans des trous formés dans ce boîtier 54 et dans des trous tels que 60 régulièrement répartis sur toute la hauteur du mât 50.

Il est à noter que les goupilles 58 ont aussi pour effet d'immobiliser le mât 50 en rotation par rapport au plateau tournant 42. A titre indicatif, on notera que l'espacement des trous peut être, par exemple, d'environ 800 mm, ce qui permet au mât 50 d'occuper des positions d'indexage en hauteur espacées de cette distance les une par rapport aux autres.

Dans le cas où l'appareil 36 est introduit par une ouverture d'accès 28 formée dans le haut du collecteur, comme l'illustrent les figures 1 et 2, le mât 50 est suspendu à un treuil (non représenté) dont la manoeuvre permet de déplacer le mât sans effort d'une position d'indexage en hauteur à une autre, avant que les goupilles 58 ne soient introduites dans les trous 60. A cet effet et comme l'illustre la figure 1, le mât 50 est équipé à son extrémité supérieure d'un anneau de levage 62.

Comme l'illustre la figure 1, le mât 50 peut être formé de plusieurs tronçons 50a (par exemple trois) fixés bout à bout les uns aux autres, selon la position occupée dans le collecteur par l'extrémité inférieure du mât. Cette caractéristique permet d'éviter que le mât ne fasse saillie sur une hauteur trop élevée au-dessus du collecteur, dans le cas où l'espace disponible à cet endroit est limité.

Grâce au mécanisme d'indexage en rotation 44 et au mécanisme d'indexage en translation ou en hauteur du mât 50, constitué par les goupilles 58 et les trous 60, l'extrémité inférieure du mât peut être placée dans différentes positions d'indexage préétablies à l'intérieur du collecteur du générateur de vapeur. Dans chacune de ces positions préétablies, la partie de l'appareil 36 située à l'extrémité inférieure du mât 50 et qui va à présent être décrite permet de balayer une zone de travail déterminée de la plaque tubulaire correspondant, par exemple, à une hauteur d'environ 800 mm et à un arc de cercle d'environ 90°. Le balayage de cette zone de travail pour chacune des positions d'indexage préétablies permet d'inspecter la totalité de la plaque tubulaire du collecteur. Dans la pratique, c'est l'étendue de la zone de travail accessible à la partie de l'appareil 36 située à l'extrémité inférieure du mât 50 qui détermine l'écartement entre les différentes positions d'indexage possibles de ce mât.

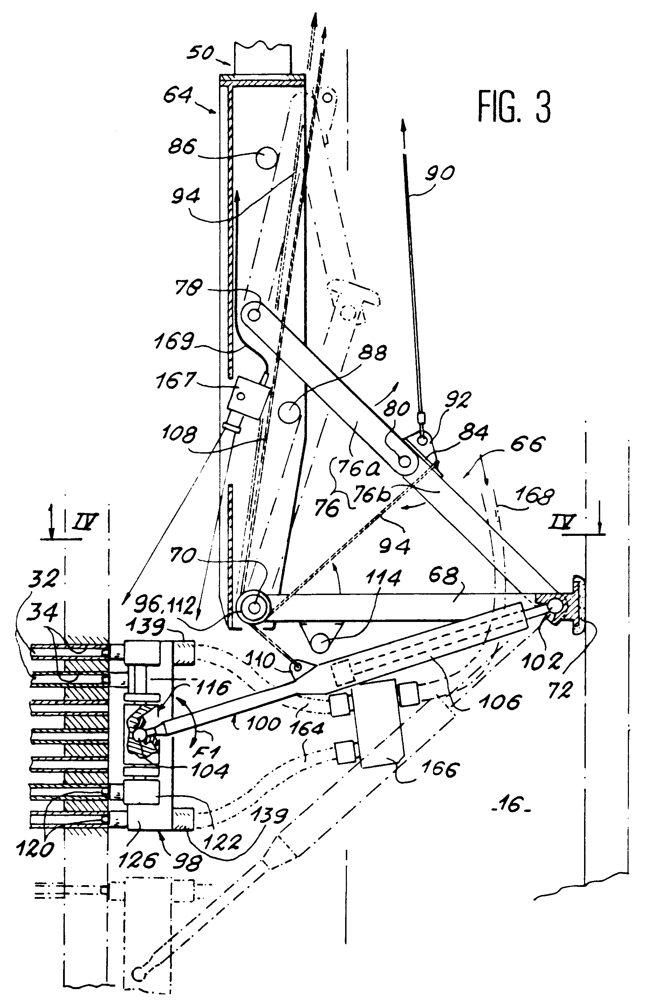

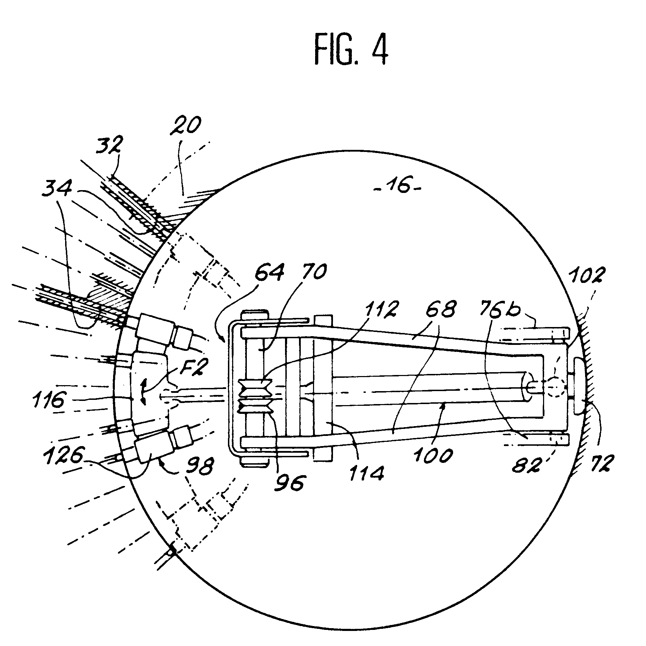

Comme l'illustre à plus grande échelle la figure 3, une platine 64 présentant en section horizontale la forme d'un U (figure 4) est fixée à l'extrémité inférieure du mât 50, dans le prolongement de ce dernier. Un pantographe 66 est articulé sur cette platine 64. Ce pantographe 66 comprend un bras inférieur 68 dont une extrémité est articulée autour d'un axe horizontal 70 sur l'extrémité inférieure de la platine 64. A l'extrémité opposée du bras 68 est fixé un patin d'appui 72 apte à venir en contact avec la plaque tubulaire 20 du collecteur 16.

Le pantographe 66 comprend de plus un bras supérieur 76 formé de deux segments articulés 76a et 76b. Une première extrémité du segment 76a du bras 76 est articulée approximativement au milieu de la platine 64 par un axe horizontal 78 parallèle à l'axe 70. L'extrémité opposée du segment 76a est articulée sur une première extrémité du segment 76b par un axe horizontal 80 parallèle aux axes 78 et 70. Enfin, l'extrémité opposée du segment 76b est articulée sur l'extrémité du bras 68 portant le patin 72 par un axe horizontal 82 (figure 4) parallèle aux axes 70, 78 et 80.

Comme l'illustre la figure 3, l'un des segments (par exemple le segment 76b du bras 76) porte sur son bord supérieur et à son extrémité adjacente à l'autre segment 76a une butée 84 qui empêche le repliement vers le bas des segments 76a et 76b autour de l'axe 80 lorsque ces segments sont alignés comme on l'a représenté en trait plein sur la figure 3. Dans ces conditions, le bras 68 est pratiquement horizontal et le pantographe 60 occupe sa position déployée de travail. Le patin d'appui 72 se trouve alors à proximité immédiate de la plaque tubulaire 20, compte tenu du dimensionnement du bras 68.

Au contraire, lorsque les segments 76a et 76b sont repliés vers le haut autour de leur axe d'articulation 80, comme on l'a représenté en trait mixte sur la figure 3, le bras 68 est également replié vers le haut autour de son axe 70 et le pantographe 66 occupe une position repliée de montage favorisant son introduction dans le collecteur et son extraction hors de ce dernier. Il est à noter que la section en U de la platine 64 et le dimensionnement relatif de cette dernière et des différents bras 68 et 76 formant le pantographe permettent à ce dernier de s'escamoter en partie à l'intérieur de la platine lorsqu'il est en position repliée. Cette position est déterminée par la venue en appui respectivement du segment 76a et du bras 68 sur des butées 86 et 88 montées sur la platine 64.

Lorsque l'appareil 36 selon l'invention est introduit par une ouverture d'accès 28 formée à l'extrémité supérieure du collecteur comme l'illustrent les figures 1 et 2, le pantographe 66 occupe automatiquement par gravité sa position déployée. Cependant, son introduction dans le collecteur et son extraction hors de celui-ci nécessitent de pouvoir commander à distance son passage en position repliée.

Dans le mode de réalisation illustré notamment sur les figures 2 et 3, cette commande est effectuée au moyen d'un câble 90 dont l'extrémité inférieure est accrochée à l'extrémité du segment 76b adjacente au segment 76a, par exemple par un anneau 92 sur lequel est formée la butée 84. Comme le montre la figure 2, le câble 90 est relié directement au plateau tournant 42 qu'il traverse librement de façon à pouvoir être manoeuvré par un opérateur situé au-dessus de ce dernier et accroché à un système d'ancrage (non représenté) monté sur le plateau 42.

L'appareil illustré sur les figures étant prévu pour pouvoir également être introduit par une ouverture d'accès formée à l'extrémité inférieure d'un collecteur cylindrique d'axe vertical, la position déployée du pantographe 66 peut aussi être commandée par un moyen d'actionnement manoeuvré à distance.

Comme l'illustrent les figures 2 et 3, ce moyen d'actionnement comprend un autre câble 94 dont l'extrémité située dans le collecteur est également accrochée sur l'anneau 92 et qui chemine sur une poulie 96 (figure 4) centrée sur l'axe 70, avant de remonter pour traverser le plateau tournant 42, de la même manière que le câble 90.

Le pantographe 66 supporte une tête de travail 98, par l'intermédiaire d'un bras de placage extensible 100. De façon plus précise, une extrémité du bras de placage extensible 100 est articulée sur le bras 68 par une rotule 102 ou par tout organe équivalent tel qu'un cardan, immédiatement derrière le patin 72. L'extrémité opposée du bras de placage extensible 100 est articulée sur la tête de travail 98 par une rotule 104 disposant seulement de deux degrés de liberté de rotation. Ces degrés de liberté de rotation comprennent une rotation (flèche F1 sur la figure 3) autour d'un axe perpendiculaire à l'axe du mât 50 et à l'axe du bras de placage 100 (c'est-à-dire dans le plan de la figure 3) et à une rotation (flèche F2 sur la figure 4) autour d'un axe perpendiculaire au précédent et qui est orienté parallèlement à l'axe du mât 50 lorsque la tête de travail 98 est plaquée contre la plaque tubulaire (c'est-à-dire une rotation dans le plan de la figure 4). En revanche, la rotule 104 interdit toute rotation autour d'un troisième axe perpendiculaire aux deux précédents, c'est-à-dire autour d'un axe orienté radialement par rapport à la plaque tubulaire lorsque la tête de travail 98 est plaquée contre cette dernière. Cet agencement permet de garantir un positionnement automatique satisfaisant de la tête de travail par rapport à la plaque tubulaire lorsque la tête de travail est amenée au contact de cette dernière.

Afin de commander l'allongement du bras de placage extensible 100, ce dernier est équipé d'un vérin pneumatique à double effet 106 représenté schématiquement sur la figure 3. Lorsque ce vérin 106 est actionné, le bras de placage 100 applique la tête de travail 98 contre la plaque tubulaire, ce qui a pour effet, par réaction, d'appliquer le patin d'appui 72 contre la plaque tubulaire, dans une partie de cette dernière située approximativement à l'opposé de la tête de travail 98. Cet appui du patin 72 permet d'assurer un placage satisfaisant de la tête de travail 98 contre la plaque tubulaire.

En raison de la présence de la rotule 102 par laquelle le bras de placage extensible 100 est articulé sur le bras 68 du pantographe, la tête de travail 98 aurait tendance à descendre par gravité si aucun moyen n'était prévu pour tirer le bras 100 vers le haut, lorsque l'appareil est introduit par une ouverture d'accès formée à l'extrémité supérieure du collecteur, comme l'illustrent les figures 1 et 2.

Dans le mode de réalisation représenté sur les figures, ce moyen est constitué par un troisième câble 108 dont l'extrémité inférieure est accrochée approximativement au milieu du bras de placage extensible 100 par un anneau 110 et qui chemine ensuite sur une poulie 112 centrée, comme la poulie 96, sur l'axe 70, avant de remonter pour traverser le plateau tournant 42 de la même manière que les câbles 90 et 94.

Comme l'illustrent les figures 3 et 4, une butée 114 portée par le bras 68 du pantographe limite le débattement vers le haut du bras de placage 100 et empêche ainsi que la tête de travail 98 puisse venir heurter la platine 64. Dans sa position limite vers le haut, proche de celle qui est illustrée en trait plein sur la figure 3, le bras de placage 100 est très légèrement incliné vers le bas.

La position limite vers le bas du bras de placage 100, représentée en trait mixte sur la figure 3, est déterminée par la nécessité d'appliquer la tête de travail contre la plaque tubulaire avec un effort de placage au moins égal à une valeur limite, ce qui devient impossible lorsque l'inclinaison vers le bas du bras 100 devient trop grande.

La rotule 102 autorise aussi un déplacement angulaire du bras 100 de part et d'autre du plan vertical médian du mât 50 et du pantographe 66, comme l'illustre la figure 4.

Ainsi, les rotules 102 et 104 permettent à la tête de travail de se déplacer dans une zone de travail de dimensions préétablies de la plaque tubulaire, cette zone de travail étant une zone rectangulaire curviligne présentant un axe de symétrie vertical situé à l'intersection du plan vertical médian du mât et du pantographe avec la plaque tubulaire.

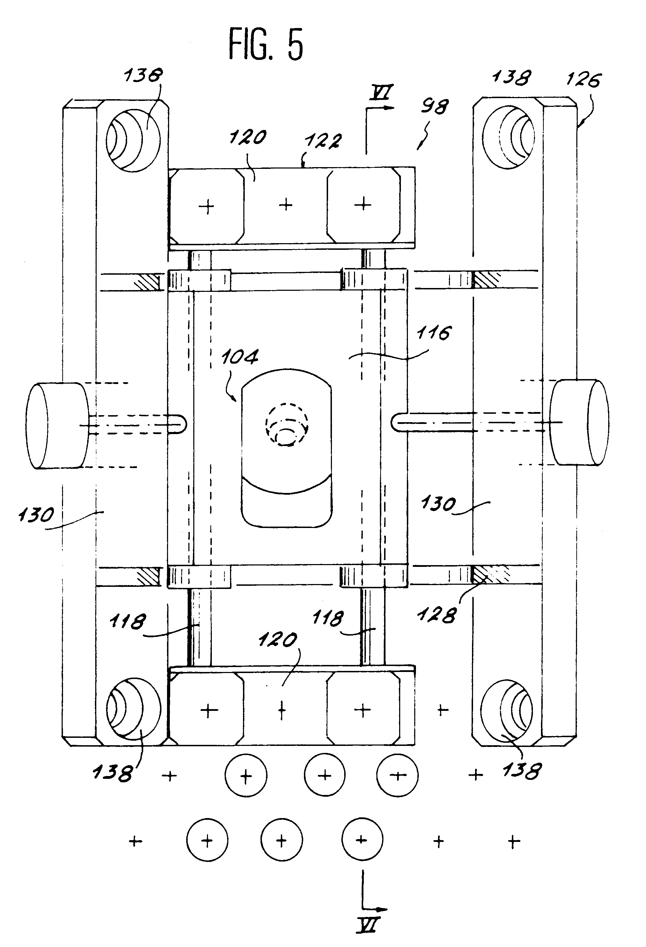

Comme l'illustrent plus en détail les figures 5 à 7, la tête de travail 98 comprend une pièce centrale 116 sur laquelle est articulée l'extrémité du bras de placage 100, par l'intermédiaire de la rotule 104. Cette pièce centrale 116, de forme approximativement rectangulaire en vue de dessus, supporte de façon coulissante deux tiges cylindriques 118, orientées parallèlement à deux des côtés du rectangle formé par la pièce 116. Les extrémités des tiges 118 sont reliées entre elles par deux pièces de liaison 120 dont la forme suit approximativement la courbure de la plaque tubulaire et qui définissent avec les tiges 118 un cadre rectangulaire 122. Ce cadre 122 dispose par rapport à la pièce centrale 116, dans la direction des tiges 118 qui sont orientées parallèlement à l'axe du collecteur lorsque la tête de travail est plaquée sur la plaque à tubes, d'une course égale à un pas dans cette même direction du ou des réseaux à pas carré formés par les perforations 34 (dans le cas d'un réseau triangulaire, celui-ci est assimilé à deux réseaux à pas carré superposés et décalés d'un demi-pas l'un par rapport à l'autre).

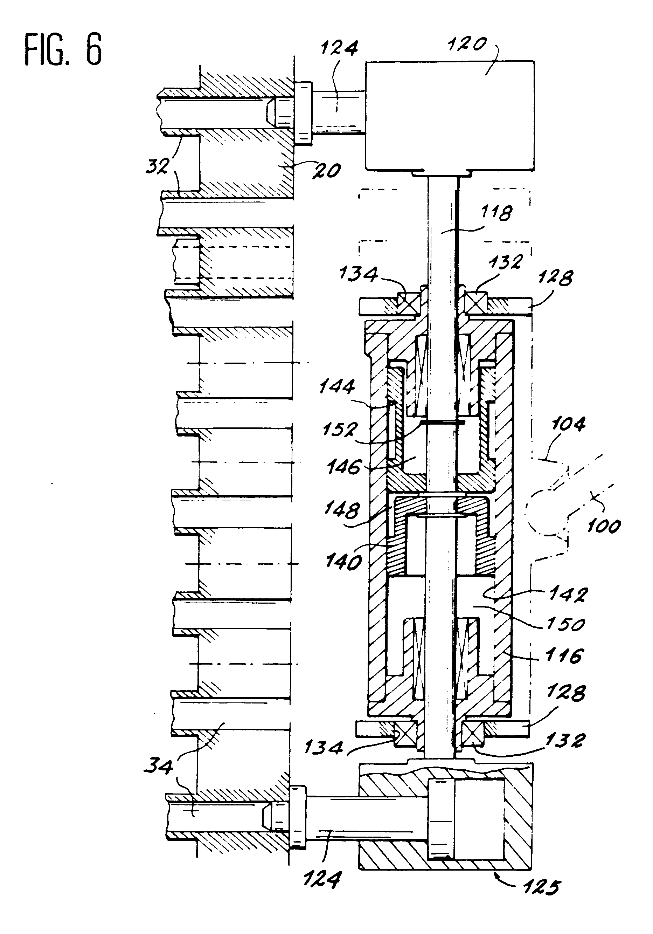

A chacun de ses angles, le cadre rectangulaire 122 est équipé de doigts 124 dont les extrémités arrondies ou tronconiques sont aptes à pénétrer dans les perforations 34 de la plaque, en se centrant automatiquement dans celles-ci, même si un léger décalage existe, par exemple en raison des tolérances d'usinage des perforations. Chacun des doigts 124 est orienté selon une direction radiale par rapport à la plaque tubulaire, lorsque la tête de travail est plaquée contre cette dernière, et peut se déplacer parallèlement à son axe, entre une position rétractée et une position en saillie, sous l'action d'un vérin pneumatique à double effet 125 (figure 6). Chacun de ces vérins peut être actionné indépendamment, ce qui permet de n'engager que deux ou trois des doigts 124 dans les perforations en vis-à-vis, dans le cas où certaines rangées du réseau sont dépourvues de perforation ou dans le cas où certaines perforations ont été obturées.

La tête de travail 98 comprend de plus un deuxième cadre rigide 126 comportant deux plaques 128 parallèles aux bords supérieur et inférieur de la pièce centrale 116 et incurvées selon la courbure de la plaque tubulaire. A leurs extrémités, les plaques 128 sont reliées par des pièces de liaison 130 parallèles aux bords latéraux de la pièce 116.

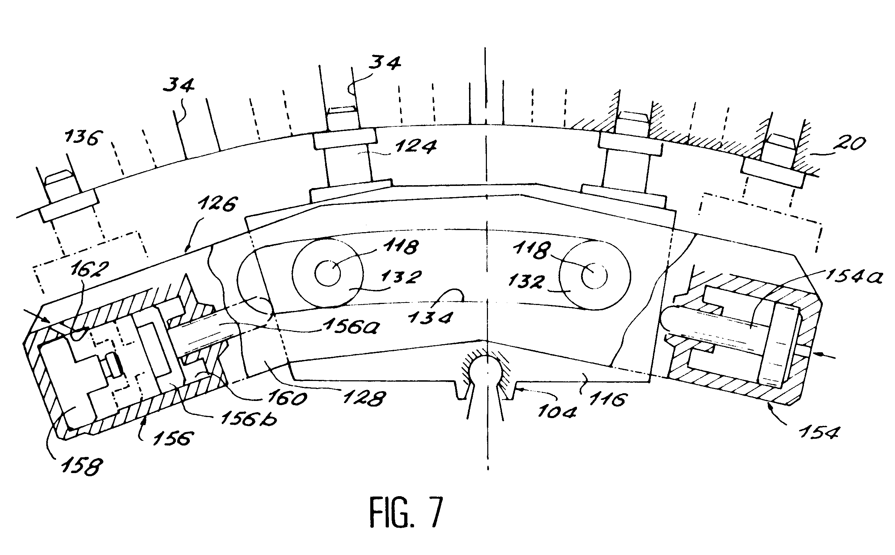

Comme le montrent notamment les figures 6 et 7, la pièce centrale 116 porte sur ses faces supérieure et inférieure des galets 132 dont les axes sont confondus avec les axes des tiges 118 et qui sont symbolisés sous la forme de roulements à billes sur la figure 6. Les galets 132 sont reçus dans des rainures en arc de cercle 134 formées parallèlement à la plaque tubulaire dans les plaques 128. Cet agencement permet au cadre rigide 126 de se déplacer dans un plan horizontal, parallèlement à la plaque tubulaire 20, sur une distance égale à un pas dans cette même direction du ou des réseaux à pas carré formés par les perforations 34.

Les pièce de liaison 130 du cadre 126 se prolongent au-delà de chacune des plaques 128, pour supporter successivement, à chacune de leurs extrémités, un doigt 136 et un support 138 de tube guide 139 (figure 3).

Comme les doigts 124, les doigts 136 forment un rectangle dont les côtés sont des multiples du pas du ou des réseaux rectangulaires formés par les perforations 34, de telle sorte qu'une extrémité tronconique ou effilée de chacun de ces doigts peut être introduite simultanément dans des perforations en vis-à-vis de la plaque tubulaire 20. Les doigts 136 sont également orientés radialement par rapport à cette dernière lorsque la tête de travail 98 est appliquée contre la plaque tubulaire, et chacun d'entre eux peut être déplacé indépendamment des autres, selon son axe, entre une position rétractée et une position en saillie, par un vérin pneumatique à double effet (non représenté).

Chacun des supports 138 de tube guide est espacé d'un pas du réseau de perforations 34 par rapport aux doigts adjacents 136, de telle sorte que les tubes guides 139 sont placés en face de quatre perforations de la plaque tubulaire 20 lorsque les doigts 136 sont engagés dans d'autres perforations de cette même plaque.

La commande du déplacement relatif entre le cadre 122 et la pièce centrale 116 parallèlement aux axes des tiges 118 est assurée par deux vérins pneumatiques à double effet logés dans la pièce 116 autour des tiges 118, comme l'illustre la figure 6. Chacun de ces vérins comprend une cloison centrale 140 liée de façon étanche à la tige 118 et reçue de façon étanche dans un alésage 142 formé dans la pièce 116. Un piston 144 est en outre logé entre la cloison 140 et l'une des extrémités fermées de l'alésage 142, de façon à pouvoir coulisser librement et de façon étanche à la fois autour de la tige 118 et dans l'alésage 142. Des tubulures d'arrivée d'air comprimé (non représentées) débouchent dans les trois chambres 146, 148 et 150 formées respectivement entre le piston 144 et l'extrémité adjacente de l'alésage 142, entre le piston 144 et la cloison 140 et entre cette dernière et l'autre extremité de l'alésage 142. En outre, la tige 118 porte, dans la chambre 146, une butée 152.

Dans l'agencement qui vient d'être décrit, le déplacement relatif entre le cadre 122 et la pièce centrale 116 est normalement obtenu en injectant de l'air comprimé soit dans la chambre 146, soit dans la chambre 150, selon le sens du déplacement à réaliser. On obtient alors, dans les deux cas, un déplacement égal à un pas.

Lorsqu'on désire passer d'un réseau à pas rectangulaire à un autre réseau à pas rectangulaire décalé d'un demi-pas par rapport au précédent (ce qui permet d'utiliser l'appareil sur une plaque tubulaire présentant un réseau à pas triangulaire équivalent à deux réseaux à pas rectangulaire superposés) on injecte de l'air comprimé dans la chambre 148. Le déplacement relatif entre le cadre 122 et la partie centrale 116 est alors limité à un demi-pas par la venue en appui du piston 144 sur la butée 152.

La commande du déplacement relatif entre le cadre 126 et la pièce centrale 116 parallèlement aux axes des rainures en arc de cercle 134 formées dans les plaques 128 est assurée par deux vérins pneumatiques 154 et 156 montés en opposition de part et d'autre de la pièce centrale 116, au centre de chacune des pièces de liaison 130, comme l'illustre la figure 7. Le vérin 154, à simple effet, agit sur la face latérale correspondante de la pièce 116 par une tige 154a. Le vérin 156 est également un vérin à simple effet qui agit sur la face latérale opposée de la pièce centrale 116 par une tige 156a. Une commande de l'un ou l'autre des vérins 154 et 156 permet de réaliser un déplacement relatif d'un pas entre la pièce centrale 116 et le cadre 126.

Pour permettre le passage de la tête de travail 98 d'un réseau rectangulaire à un autre décalé d'un demi-pas, dans la direction circonférentielle définie par les rainures en arc de cercle 134, le vérin 156 comprend de plus, en arrière de son piston 156b lié à la tige 156a, un deuxième piston 158 qui reste normalement plaqué contre le fond de l'alésage 160 dans lequel sont placés les pistons 156b et 158. Ce piston 158 dispose d'une course limitée à un demi-pas par un épaulement 162 formé dans l'alésage 160. Par conséquent, lorsqu'on injecte de l'air comprimé à l'arrière du piston 158, on réalise un déplacement relatif d'un demi-pas entre la pièce 116 et le cadre 126 selon la direction circonférentielle précitée.

En se référant à nouveau à la figure 3, on voit que des tubes souples 164 relient chacun des tubes guides 139 à un sélecteur 166, à commande pneumatique, qui permet de relier à volonté chacun des tubes 164 avec un tube souple 168 dont l'extrémité opposée est raccordée au dispositif tireur-pousseur 52, comme l'illustre la figure 2. Afin de prendre en compte les différences de hauteur de la tête de travail 98 à l'intérieur du collecteur, le tube 168 est réalisé de préférence en plusieurs tronçons, le nombre des tronçons étant modifié en fonction de la position de la tête de travail dans le collecteur.

Pour permettre un positionnement satisfaisant des doigts 120 de la tête de travail 98 approximativement en face des perforations 34 de la plaque tubulaire lorsqu'une nouvelle zone de cette dernière doit être inspectée, une caméra de télévision 167 est montée sur la platine 64 et orientée vers la tête de travail. Cette caméra 167 est reliée par un câble 169 à un système de visualisation extérieur tel qu'un écran de télévision (non représenté).

Le fonctionnement de l'appareil conforme à l'invention va à présent être décrit en se référant aux figures 1 à 4.

Lorsque les tubes du générateur de vapeur doivent être inspectés, on enlève le couvercle obturant l'un des collecteurs 16 et 18. L'introduction du pantographe 66 et de la tête de travail 98 est réalisée en maintenant le pantographe en position repliée grâce au câble 90 et en relâchant le câble 94 afin que la tête de travail et le bras extensible 100 soient suspendus par gravité. L'embase 38 est mise en place sur la face supérieure de l'ouverture 28 et fixée par exemple à l'aide des goujons 40. Pendant toutes ces opérations, le mât 50 est suspendu à un treuil et les goupilles 58 sont placées dans des trous 60 correspondants.

Lorsque l'embase 38 a été fixée, le mât 50 est indexé en rotation et en translation dans une première position déterminant une première zone d'inspection de la plaque tubulaire. On déploie alors le pantographe 66 en relâchant le câble 90, tout en appliquant une certaine tension sur le câble 94, afin de maintenir la tête de travail 98 à proximité de la paroi de la plaque tubulaire. L'opérateur actionne alors le vérin 106 du bras de placage extensible 100, afin d'amener les doigts 120 contre la paroi de la plaque tubulaire. Au cours de cette opération, l'opérateur positionne les doigts 120 en face des perforations 34, grâce à l'image fournie par la caméra 167, en agissant sur le câble 108. Lorsqu'un positionnement approximatif satisfaisant est obtenu, un effort plus important est appliqué par le vérin 106, de sorte que les doigts 120 se centrent automatiquement dans les perforations 34. Par réaction, le patin 72 est également appliqué contre la paroi de la plaque tubulaire, ce qui détermine un point d'appui permettant de plaquer en permanence avec un effort suffisant la tête de travail 98 contre la plaque tubulaire.

La tête de travail 98 est alors en position pour effectuer le contrôle des perforations dans une zone de la plaque tubulaire s'étendant sur une hauteur et sur une portion circonférentielle de valeurs prédéterminées. Pour chaque position de la tête de travail 98, quatre contrôles peuvent être effectués en injectant successivement la sonde de contrôle à courants de Foucault associée au dispositif tireur-pousseur 52 dans les quatre perforations qui se trouvent en face des tubes guides 122, ce qui peut être réalisé grâce au sélecteur 126.

Lorsque les contrôles ont été effectués, les vérins commandant le déplacement de la tête de travail 98 sont actionnés pour déplacer cette dernière d'un pas soit dans le sens horizontal, soit dans le sens vertical. Une nouvelle série de contrôles peut alors être réalisée. Le contrôle de l'ensemble des perforations accessibles pour une position donnée du mât 50 est poursuivi de cette manière, en réalisant successivement le contrôle des perforations disposées selon les deux réseaux à pas rectangulaire déterminant un réseau à pas triangulaire, lorsque les perforations 34 sont formées selon un réseau à pas triangulaire. Au fur et à mesure que la tête de travail 98 se déplace, elle reste appliquée contre la plaque tubulaire par le vérin 106 du bras de placage extensible 100.

Lorsque, au cours de son déplacement, la tête de travail 98 rencontre des zones de la plaque tubulaire dépourvues de perforations ou dans lesquelles certaines perforations ont été obturées, le déplacement est poursuivi sans difficulté grâce à la possibilité de commander individuellement chacun des doigts 120 de la tête de travail.

Lorsque le contrôle d'une zone de la plaque tubulaire accessible sans déplacement du mât 50 est terminé, le vérin 106 est relâché et le câble 108 est en partie libéré, de sorte que la tête de travail est à nouveau écartée de la plaque tubulaire, de même que le patin 72. Le mât 50 est alors amené soit par une rotation du plateau 42, soit par une translation de ce mât, soit par une combinaison de ces deux mouvements, à un autre point d'indexage distinct du précédent. Une nouvelle zone de la plaque tubulaire peut alors être contrôlée.

En déplaçant ainsi le mât 50 à la fois verticalement et en rotation afin de lui faire occuper les différents points d'indexage préétablis, et en effectuant pour chacune de ces points d'indexage, le contrôle de la zone de la plaque tubulaire accessible par la tête de travail 98, on réalise de façon très simple le contrôle de toutes les perforations existant dans cette plaque, sans que la mise en oeuvre de l'appareil nécessite un personnel ayant une qualification poussée, et sans que les tolérances de fabrication ainsi que les défauts existants dans le réseau de perforations n'aient d'incidence sur la qualité du contrôle.

Comme l'illustre très schématiquement la figure 5, l'appareil qui vient d'être décrit peut aussi être utilisé pour accéder à un collecteur 216 accessible par une ouverture d'accès 228 formée dans le bas de ce collecteur. Le fonctionnement de l'appareil est alors pratiquement identique à celui qui vient d'être décrit. Cependant, au lieu d'être supporté par un treuil placé au-dessus du mât 50 comme dans l'application précédente, le poids du mât 50 et des organes portés par ce dernier est supporté par un treuil 170 fixé sur le plateau tournant 42 et sur lequel est enroulé un câble 172 passant par une poulie 174 montée à l'extrémité inférieure du mât 50, avant de remonter le long du mât pour être fixée par son extrémité opposée sur le plateau 42.

Par ailleurs, les opérations de déploiement du pantographe 66 sont réalisées en agissant sur le câble 94 et non par gravité.

Lorsque l'appareil selon l'invention est prévu pour être utilisé uniquement dans des collecteurs présentant un orifice d'accès supérieur, le câble 94 peut être supprimé. Par ailleurs, les mécanismes manuels permettant de commander les déplacements en rotation du plateau 42 et en translation du mât 50 pourraient être remplacés par des systèmes motorisés.

De façon plus générale, il est important de noter que l'appareil selon l'invention n'est pas limité à l'application particulière décrite et peut être utilisé à chaque fois que l'on désire positionner à distance un organe quelconque à l'intérieur d'une cavité cylindrique dans laquelle débouchent des perforations, quelle que soit l'inclinaison de l'axe de la cavité et quelle que soit la nature de l'organe à positionner (appareil de contrôle, outillage, etc.).

## Revendications

1. Appareil pour le positionnement sélectif d'un organe dans une cavité cylindrique d'axe donné, pourvue d'une ouverture d'accès à l'une de ses extrémités et dans laquelle débouchent radialement des perforations disposées selon un réseau, caractérisé par le fait qu'il comprend une embase (38) prévue pour être fixée sur ladite ouverture et supportant un mât (50) par l'intermédiaire de moyens de positionnement (42, 48) permettant de déplacer ce mât en rotation et en translation, entre différentes positions d'indexage préétablies, le mât étant orienté parallèlement à l'axe de la cavité et supportant, à l'intérieur de cette dernière, un patin d'appui (72) et une tête de travail (98) reliée au patin d'appui par un bras de placage extensible (100) muni de moyens d'allongement (106) dont une mise en oeuvre a pour effet de plaquer simultanément le patin d'appui et la tête de travail contre une paroi intérieure cylindrique de la cavité, la tête de travail étant équipée de doigts escamotables (120) aptes à être introduits dans les perforations, de moyens de commande (140,154,156) d'un déplacement de la tête de travail dans une zone de travail donnée de ladite paroi, différente pour chacune des positions d'indexage du mât, et d'au moins un support (138) apte à recevoir ledit organe à positionner.

2. Appareil selon la revendication 1, caractérisé par le fait que le patin d'appui (72) est monté sur un pantographe (66) articulé sur une platine (64) fixée dans le prolongement du mât (50), le bras de placage extensible (100) étant articulé de façon rotulante sur le pantographe (66), à proximité du patin d'appui (72) et sur la tête de travail (98).

3. Appareil selon la revendication 2, caractérisé par le fait que la platine (64) supporte également une caméra de télévision (167).

4. Appareil selon l'une quelconque des revendications 2 et 3, caractérisé par le fait que le pantographe comprend un premier bras (68) monté pivotant à l'extrémité de la platine la plus éloignée du mât, autour d'un axe perpendiculaire à l'axe du mât, ce premier bras portant ledit patin d'appui (72) à son extrémité, et un deuxième bras (76) formé de deux segments (76a, 76b) articulés entre eux et, par leurs extrémités opposées, sur la platine et sur le premier bras, par des axes perpendiculaires à l'axe du mât, les segments du deuxième bras occupant une position alignée déterminée par une butée (84) lorsque le pantographe est déployé, et une position pliée en éloignement du premier bras lorsque le pantographe est replié.

5. Appareil selon la revendication 4, caractérisé par le fait que les extrémités opposées des segments du deuxième bras (76) sont articulées respectivement approximativement au milieu de la platine et à l'extrémité du premier bras portant le patin.

6. Appareil selon l'une quelconque des revendications 4 et 5, caractérisé par le fait que, l'appareil étant prévu pour être utilisé dans une cavité d'axe approximativement vertical, des moyens de manoeuvre à distance du pantographe comprennent au moins un câble (90, 94) ancré sur le deuxième bras à proximité de l'articulation reliant les segments qui forment ce deuxième bras.

7. Appareil selon la revendication 6, caractérisé par le fait que, l'appareil étant prévu pour être introduit indifféremment par des ouvertures d'accès inférieure et supérieure, les moyens de manoeuvre à distance du pantographe comprennent deux câbles (90, 94) dont l'un est relié directement à l'extérieur de la cavité et dont l'autre est relié à l'extérieur de la cavité en passant par une poulie (96) centrée sur l'axe d'articulation du premier bras sur la platine.

8. Appareil selon l'une quelconque des revendications 4 à 7, caractérisé par le fait que, l'appareil étant prévu pour être introduit par une ouverture d'accès supérieure dans une cavité d'axe approximativement vertical, le bras de placage extensible (100) est relié à l'extérieur de la cavité par un câble de contrôle d'inclinaison (108) passant sur une poulie (112) centrée sur l'axe d'articulation du premier bras sur la platine.

9. Appareil selon l'une quelconque des revendications précédentes, caractérisé par le fait que les moyens d'allongement du bras de placage extensible (100) comprennent un vérin pneumatique (106).

10. Appareil selon l'une quelconque des revendications précédentes, caractérisé par le fait que la tête de travail (98) est articulée sur le bras de placage (100) par une rotule (104) disposant seulement de deux degrés de liberté de rotation, respectivement autour d'un premier axe perpendiculaire à l'axe du mât et à l'axe du bras de placage, et autour d'un deuxième axe perpendiculaire au premier axe et apte à être orienté parallèlement à l'axe du mât.

11. Appareil selon l'une quelconque des revendications précédentes, caractérisé par le fait que le mât (50) est formé de plusieurs tronçons fixés bout à bout.

12. Appareil selon l'une quelconque des revendications précédentes, caractérisé par le fait que les moyens de positionnement comprennent un plateau tournant (42) monté sur l'embase (38) et des moyens d'indexage en rotation (44) du plateau tournant par rapport à cette dernière.

13. Appareil selon la revendication 12, caractérisé par le fait que les moyens de positionnement comprennent de plus des moyens de guidage (48) autorisant une translation du mât (50) par rapport au plateau tournant (42) selon une direction parallèle à l'axe de la cavité, et des moyens d'indexage en translation (58, 60) du mât par rapport au plateau tournant.

14. Appareil selon l'une quelconque des revendications précédentes, caractérisé par le fait que la tête de travail (98) comprend deux cadres (122, 126) aptes à se déplacer selon deux directions perpendiculaires l'une par rapport à l'autre, par rapport à une pièce centrale (116) à laquelle est relié le bras de placage extensible (100), chacun de ces cadres comportant quatre doigts escamotables (120), lesdits moyens de commande de déplacement (140,154,156) étant agencés de façon à pouvoir commander un déplacement sur une distance égale à un pas d'un réseau rectangulaire formé par les perforations, et à un demi-pas de ce réseau.

## Patentansprüche

1. Vorrichtung zum wahlweisen Positionieren eines Gerätes in einem zylindrischen Hohlraum mit vorgegebener Achse, der mit einer Zugangsöffnung an einem seiner Enden versehen ist und in den in einem Muster angeordnete Perforationen radial münden, dadurch gekennzeichnet, daß sie eine Befestigungsfläche (38) aufweist, die vorgesehen ist, an der genannten Öffnung befestigt zu werden, und einen Mast (50) mittels Positionierungseinrichtungen (42, 48) trägt, die ermöglichen, diesen Mast in Drehung und in Verschiebung zwischen unterschiedlichen vorgegebenen Teilungspositionen zu bewegen, wobei der Mast parallel zu der Achse des Hohlraumes ausgerichtet ist und im Inneren dieses letzteren einen Stützklotz (72) und einen Arbeitskopf (98) trägt, der mit dem Stützklotz über einen ausziehbaren Andrückarm (100) verbunden ist, der mit Verlängerungsmitteln (106) versehen ist, deren Inbetriebnahme die Wirkung hat, gleichzeitig den Stützklotz und den Arbeitskopf gegen eine zylindrische Innenwandung des Hohlraumes zu drücken, wobei der Arbeitskopf mit einziehbaren Fingern (120), die in die Perforationen eingeführt werden können, mit Steuermitteln (140, 154, 156) für eine Bewegung des Arbeitskopfes in einen gegebenen Arbeitsbereich der genannten Wandung, der für jede der Teilungspositionen des Masten unterschiedlich ist, und mit wenigstens einer Stütze (138) ausgerüstet ist, die das genannte, zu positionierende Gerät aufnehmen kann.

2. Vorrichtung nach Anspruch 1, dadurch gekennzeichnet, daß der Stützklotz (72) an einem Pantograph (66) befestigt ist, der auf einer in Verlängerung des Masten (50) befestigten Halteplatte angelenkt ist, wobei der ausziehbare Andrückarm (100) in einer gelenkkopfartigen Weise an dem Pantograph (66) nahe dem Stützklotz (72) und an dem Arbeitskopf (98) angelenkt ist.

3. Vorrichtung nach Anspruch 2, dadurch gekennzeichnet, daß die Halteplatte (64) ebenfalls eine Fernsehkamera (167) trägt.

4. Vorrichtung nach einem der Ansprüche 2 oder 3, dadurch gekennzeichnet, daß der Pantograph einen ersten Arm (68), der an den am weitesten von dem Mast entfernten Ende der Halteplatte um eine zu der Achse des Masten senkrechte Achse verschwenkbar angebracht ist, wobei dieser erste Arm an seinem Ende den genannten Stützklotz (72) trägt, und einen zweiten Arm (76) umfaßt, der aus zwei Abschnitten (76a, 76b) gebildet ist, die aneinander und mit ihren entgegengesetzten Enden an der Halteplatte und an dem ersten Arm über zu der Achse des Masten senkrechte Achsen angelenkt sind, wobei die Abschnitte des zweiten Armes eine durch einen Anschlag (84) bestimmte, ausgerichtete Stellung, wenn der Pantograph entfaltet ist, und eine gefaltete Stellung mit Abstand von dem ersten Arm einnehmen, wenn der Pantograph gefaltet ist.

5. Vorrichtung nach Anspruch 4, dadurch gekennzeichnet, daß die entgegengesetzten Enden der Abschnitte des zweiten Armes (76) jeweils ungefähr in der Mitte der Halteplatte und an dem Ende des ersten, den Block tragenden Armes angelenkt sind.

6. Vorrichtung nach einem beliebigen der Ansprüche 4 und 5, dadurch gekennzeichnet, daß die Vorrichtung vorgesehen ist, in einem Hohlraum mit ungefähr vertikaler Achse verwendet zu werden, wobei Fernbedienungsmittel des Pantographen wenigstens ein Kabel (90, 94) umfassen, das an dem zweiten Arm nahe dem die Abschnitte verbindenden Gelenk verankert ist, die diesen zweiten Arm bilden.

7. Vorrichtung nach Anspruch 6, dadurch gekennzeichnet, daß die Vorrichtung vorgesehen ist, unterschiedslos durch die untere und obere Zugangsöffnung eingeführt zu werden, wobei die Fernbedienungsmittel des Pantographen zwei Kabel (90, 94) umfassen, von denen eines unmittelbar mit dem Äußeren des Hohlraumes verbunden ist und das andere mit dem Äußeren des Hohlraumes verbunden ist, wobei es über eine Seilrolle (96) läuft, die auf der Gelenkachse des ersten Armes an der Halteplatte zentriert ist.

8. Vorrichtung nach einem beliebigen der Ansprüche 4 bis 7, dadurch gekennzeichnet, daß die Vorrichtung vorgesehen ist, durch eine obere Zugangsöffnung in einen Hohlraum mit ungefähr vertikaler Achse eingeführt zu werden, wobei der ausziehbare Andrückarm (100) mit dem Äußeren des Hohlraumes durch ein Neigungssteuerungskabel (108) verbunden ist, das über eine Seilrolle (112) läuft, die auf der Gelenkachse des ersten Armes an der Halteplatte zentriert ist.

9. Vorrichtung nach einem beliebigen der vorhergehenden Ansprüche, dadurch gekennzeichnet, daß die Verlängerungsmittel des ausziehbaren Andrückarmes (100) einen Pneumatikzylinder (106) umfassen.

10. Vorrichtung nach einem beliebigen der vorhergehenden Ansprüche, dadurch gekennzeichnet, daß der Arbeitskopf (98) an den Andrückarm (100) durch ein Kugelgelenk (104) angelenkt ist, das nur zwei Drehfreiheitsgrade aufweist, um eine erste zu der Achse des Masten und zu der Achse des Armes senkrechte Richtung bzw. um eine zweite Achse, die zu der ersten Achse senkrecht ist und parallel zu der Achse des Masten ausgerichtet werden kann.

11. Vorrichtung nach einem beliebigen der vorhergehenden Ansprüche, dadurch gekennzeichnet, daß der Mast (50) aus mehreren Schnitten gebildet ist, die Ende an Ende befestigt sind.

12. Vorrichtung nach einem beliebigen der vorhergehenden Ansprüche, dadurch gekennzeichnet, daß die Positionierungsmittel eine Drehplatte (42), die an der Befestigungsfläche (38) angebracht ist, und Drehteilungsmittel (44) der Drehplatte in bezug auf diese letztere umfassen.

13. Vorrichtung nach Anspruch 12, dadurch gekennzeichnet, daß die Positionierungsmittel ferner Führungsmittel (48) umfassen, die eine Verschiebung des Masten (50) in bezug auf die Drehplatte (42) längs einer Richtung parallel zu der Achse des Hohlraumes erlauben, und Verschiebungsteilungsmittel (58, 60) des Masten in bezug auf die Drehplatte umfassen.

14. Vorrichtung nach einem beliebigen der vorhergehenden Ansprüche, dadurch gekennzeichnet, daß der Arbeitskopf (98) zwei Rahmen (122, 126) umfaßt, die sich zu einander in zwei senkrechten Richtungen in bezug auf ein mittleres Teil (116) bewegen können, mit dem der ausziehbare Andrückarm (100) verbunden ist, wobei jeder dieser Rahmen vier einziehbare Finger (120) umfaßt, die genannten Verschiebungssteuerungsmittel (140, 154, 156) derart ausgebildet sind, eine Verschiebung über eine Strecke gleich einem Schritt eines Gitters, das rechteckförmig durch die Perforation gebildet ist, und einem halben Schritt dieses Gitters steuern zu können.

## Claims

1. Device for the selective positioning of a member in a cylindrical cavity having a given axis, provided with an access opening at one of its ends and into which radially issue perforations arranged in the form of a network, characterized in that it comprises a base (38) for fixing to said opening and which supports a pole (50) by means of positioning means (42, 48) making it possible to displace said pole in rotation and translation, between different preestablished indexing positions, the pole being oriented parallel to the axis of the cavity and supports within the latter a support block (72) and a working head (98) connected to the support block by an extensible cladding arm (100) equipped with extension means (106), whose use has the effect of simultaneously engaging the support block and the working head against an inner cylindrical wall of the cavity, the working head being equipped with retractable fingers (120) which can be introduced into the perforations, means (140, 154, 156) for controlling a displacement of the working head in a given working area of said wall and which is different for each of the pole indexing positions, and at least one support (138) able to receive said member to be positioned.

2. Device according to claim 1, characterized in that the support block (72) is fitted on a pantograph (66) articulated on a plate (64) fixed in the extension of the pole (50), the extensible cladding arm (100) being articulated in ball and socket joint manner on the pantograph (66), in the vicinity of the support block (72) and on the working head (98).

3. Device according to claim 2, characterized in that the plate (64) also supports a television camera (167).

4. Device according to any one of the claims 2 and 3, characterized in that the pantograph comprises a first arm (68) mounted in pivoting manner at the end of the plate furthest from the pole, about an axis perpendicular to the pole axis, said first arm carrying the support block (72) at its end, and a second arm (76) formed from two inter-articulated segments (76a, 76b) and which are articulated by their opposite ends to the plate and to the first arm by axes perpendicular to the pole axis, the segments of the second arm occupying an aligned position determined by an abutment (84) when the pantograph is opened out and a folded position on moving away from the first arm when the pantograph is folded up.

5. Device according to claim 4, characterized in that the opposite ends of the segments of the second arm (76) are respectively articulated approximately in the centre of the plate and to the end of the first arm carrying the support block.

6. Device according to any one of the claims 4 and 5, characterized in that as the device is intended to be used in a cavity having an approximately vertical axis, remote pantograph manipulating means incorporate at least one cable (90, 94) anchored to the second arm in the vicinity of the articulation connecting the segments which form said second arm.

7. Device according to claim 6, characterized in that as the device is intended to be introduced either through the lower or upper access openings, the remote pantograph manipulating means incorporate two cables (90, 94), whereof one is directly connected to the outside of the cavity and whereof the other is connected to the outside of the cavity passing via a pulley (96) centred on the articulation axis of the first arm on the plate.

8. Device according to any one of the claims 4 to 7, characterized in that as the device is intended for introduction through an upper access opening into a cavity having an approximately vertical axis, the extensible cladding arm (100) is connected to the outside of the cavity by an inclination control cable (108) passing over a pulley (112) centred on the articulation axis of the first arm on the plate.

9. Device according to any one of the preceding claims, characterized in that the extension means for the extensible cladding arm (100) incorporate a pneumatic jack (106).

10. Device according to any one of the preceding claims, characterized in that the working head (98) is articulated to the cladding arm (100) by a ball and socket joint (104) having only 2° of rotational freedom respectively about a first axis perpendicular to the pole axis and to the axis of the cladding arm, and about a second axis perpendicular to the first axis and which can be oriented parallel to the pole axis.

11. Device according to any one of the preceding claims, characterized in that the pole (50) is formed from several sections fixed end to end.

12. Device according to any one of the preceding claims, characterized in that the positioning means incorporate a rotary plate member (42) mounted on the base (38) and means for the rotational indexing (44) of the rotary plate with respect to the latter.

13. Device according to claim 12, characterized in that the positioning means also comprise guidance means (48) allowing a translation of the pole (50) with respect to the rotary plate (42) in a direction parallel to the axis of the cavity, as well as means (58, 60) for the indexing in translation of the pole relative to the rotary plate.

14. Device according to any one of the preceding claims, characterized in that the working head (98) comprises two frames (122, 126) movable in two directions perpendicular to one another with respect to a central part (116) to which is connected the extensible cladding arm (100), each of these frames having four retractable fingers (120), said displacement control means (140, 154, 156) being arranged in such a way as to be able to control a displacement over a distance equal to a spacing of a rectangular network formed by the perforations and to a half-spacing of said network.
